# EUROPÄISCHE PATENTSCHRIFT

(11) **EP 2 565 860 B1**
(45) Veröffentlichungstag und Bekanntmachung des Hinweises auf die Patenterteilung: **15.01.2014**
(21) Anmeldenummer: 11450108.3
(22) Anmeldetag: 30.08.2011
(51) Int. Cl.: G08G 1/017, G06K 9/32, H04N 5/232, H04N 5/345

(54) **Vorrichtung und Verfahren zum Erkennen von Fahrzeug-Kennzeichentafeln**
Device and method for detecting vehicle identification panels
Dispositif et procédé destinés à la reconnaissance de plaques d'immatriculation de véhicules

(43) Veröffentlichungstag der Anmeldung: 06.03.2013
(73) Patentinhaber: Kapsch TrafficCom AG, 1120 Wien (AT)
(72) Erfinder: Mitic, Sladjan, 1100 Wien (AT)
(74) Vertreter: Weiser, Andreas

(56) Entgegenhaltungen:
- WO-A2-2008/057285
- WO-A2-2008/136007
- US-A1- 2008 158 365
- US-A1- 2009 160 976
- CLEMENS ARTH ET AL: "Real-Time License Plate Recognition on an Embedded DSP-Platform", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1. Juni 2007 (2007-06-01), Seiten 1-8, XP031114642, ISBN: 978-1-4244-1179-5

## Beschreibung

Die vorliegende Erfindung betrifft eine Vorrichtung gemäß dem Oberbegriff des Anspruchs 1. Die Erfindung betrifft ferner ein Verfahren zum Erkennen einer Fahrzeug-Kennzeichentafel im optischen Kamerabild einer Verkehrsüberwachungskamera, die auf einen Straßenabschnitt gerichtet ist.

Eine Vorrichtung gemäß dem Oberbegriff des Anspruchs 1 ist aus der US 2008/0158365 A1 bekannt.

Das Erkennen von Fahrzeug-Kennzeichentafeln in einem Kamerabild bzw. einer Bildfolge (Videostream) einer Videokamera ist eine häufige Aufgabe in Verkehrsüberwachungsanwendungen und auch eine Vorstufe für automatische Kennzeichenleseverfahren mittels OCR (optical character recognition). Für aussagekräftige und gut OCR-lesbare Bildaufnahmen muss genau jenes Bild der Bildfolge detektiert werden, in dem die Fahrzeug-Kennzeichentafel vollständig und gut lesbar ist. Für OCR-Anwendungen ist es überdies von Vorteil, wenn die Fahrzeug-Kennzeichentafel an einer möglichst stabilen Position im Bild liegt. Herkömmliche Kennzeichentafel-Detektionssysteme verwenden dazu "virtuelle Triggerlinien", die im optischen Kamerabild definiert werden und, wenn die Kennzeichentafel eines passierenden Fahrzeugs an dieser Triggerlinie detektiert wird, werden das bzw. die nächsten Bilder der Bildfolge als Detektionsergebnis für die weitere OCR-Auswertung verwendet.

Es ist bekannt, die Detektion an der virtuellen Triggerlinie durch Auskopplung einer Lichtzeile aus dem optischen Kamerabild über Glasfaserleiter auf eine gesonderte Detektorzeile oder durch Echtzeit-Bildverarbeitungsverfahren (siehe z.B. Clemens Arth et al: "Real-time License Plate Recognition on an Embedded DSP-Platform", IEEE Conference on Computer Vision and Pattern Recognition, 18-23 June 2007, Minneapolis, USA) direkt am Videostream durchzuführen. Erste Variante ist mechanisch/optisch aufwändig und zweite Variante rechentechnisch aufwändig.

Eine dritte, aus der US 2008/0158365 A1 bekannte Variante verwendet eine Videokamera, die zwischen einem ersten Betriebsmodus, in dem sie eine erste Bildfolge mit einer niedrigen Auflösung und einer hohen Bildrate erzeugt, und einem zweiten Betriebsmodus umschaltbar ist, in dem sie eine zweite Bildfolge mit einer niedrigen Bildrate und einer hohen Auflösung erzeugt, wobei die Videokamera mittels eines Steuersignals vom ersten in den zweiten Betriebsmodus versetzbar ist, wenn eine an die Videokamera angeschlossene Detektoreinrichtung eine Kennzeichentafel in der ersten Bildfolge detektiert.

Die zweite und die dritte Variante führen aufgrund der begrenzten Detektionsganauigkeit, sei es durch zu geringe Bildrate oder zu geringe Auflösung, zu einem "Lagejitter" der Fahrzeug-Kennzeichentafel in der als Detektionsergebnis ausgewählten Bildaufnahme: Da sich Fahrzeuge über einen Straßenabschnitt und damit über das optische Kamerabild mit unterschiedlicher Geschwindigkeit bewegen, kommen sie in den Bildern der Bildfolge je nach ihrer Geschwindigkeit an unterschiedlichen Positionen zu liegen, was Beweis- und OCR-Auswertungen des Ergebnisbildes erschwert.

Die Erfindung setzt sich zum Ziel, die Nachteile der bekannten Detektionssysteme zu überwinden und Vorrichtungen bzw. Verfahren zur Kennzeichentafelerkennung zu schaffen, welche mit geringem Aufwand eine hohe Erkennungsgenauigkeit und damit einen geringeren Lagejitter erreichen.

Dieses Ziel wird in einem ersten Aspekt der Erfindung mit einer Vorrichtung der einleitend genannten Art erzielt, die sich durch die kennzeichnenden Merkmale des Anspruchs 1 auszeichnet.

In einem zweiten Aspekt schafft die Erfindung ein Verfahren zum Erkennen einer Fahrzeug-Kennzeichentafel im optischen Kamerabild einer Verkehrsüberwachungskamera, die auf einen Straßenabschnitt gerichtet ist, mit den Merkmalen des Anspruchs 6.

Die Erfindung beruht auf dem neuartigen Ansatz, eine zwischen zwei verschiedenen Abtastmodi umschaltbare Videokamera zu verwenden, und zwar einem ersten Modus, in dem ein schmaler streifenförmiger Bildbereich als "virtuelle Triggerlinie" mit einer hohen Bildrate (frame rate) abgetastet wird, bis darin eine Kennzeichentafel detektiert wird - wobei die hohe Bildrate nicht notwendigerweise eine Erhöhung der Abtastgeschwindigkeit erfordert, sondern sich bereits aus der geringen Breite des Ausschnitts ergeben kann - und einem zweiten Modus, der bei Detektion der Kennzeichentafel im ersten Modus ausgelöst wird, um ein größeres Bild anzufertigen, in dem die Kennzeichentafel an einer - aufgrund der vorherigen Detektion mit hoher Bildrate - sehr exakten Position zu liegen kommt. Im Ergebnis wird eine genaue Detektion mit geringem Lagejitter auf kostengünstige Art und Weise erreicht. Dazu ist weder eine aufwändige Glasfaseroptik zur Auskopplung von Bildteilen noch eine hohe Rechenleistung zur Echtzeit-Bildverarbeitung des Gesamtbildes erforderlich. Die Erfindung ist mit herkömmlichen Industriestandard-Videokameras realisierbar, welche zwischen verschiedenen Aufnahme- bzw. Abtastbereichen ("areas of interest", AOI) umschaltbar sind.

Eine besonders sichere Art der Kennzeichentafeldetektion kann erreicht werden, indem das zu detektierende, eine Kennzeichentafel anzeigende Signal sich über mehrere aufeinanderfolgende Abtastzeilen des genannten streifenförmigen Ausschnitts erstreckt. Im ersten Betriebsmodus braucht dadurch das Videokamera-Abtastsignal lediglich mit einem entsprechend langen Referenzsignal verglichen zu werden, um eine Kennzeichentafel sicher zu detektieren.

Das zu detektierende Signal ist eine Folge von Bursts, deren Länge jeweils der Breite einer zu erkennenden Kennzeichentafel entspricht, wodurch auch unterschiedliche Arten von Kennzeichentafeln selektiv detektiert werden können.

Durch Verwendung zweier unterschiedlicher Betriebsmodi ein- und derselben Videokamera können auch die Bildaufnahmen in den beiden Modi speziell an ihren jeweiligen Zweck angepasst werden. So kann im ersten Betriebsmodus der Straßenabschnitt mit einer entsprechend gesteuerten Lichtquelle anders beleuchtet werden als im zweiten Betriebsmodus, bevorzugt stärker und/oder in einem anderen Wellenlängenbereich, welcher die Detektion einer Kennzeichentafel im ersten Betriebsmodus erleichtert. Beispielsweise kann der Straßenabschnitt im ersten Betriebsmodus mit einem starken Infrarotstrahler beleuchtet werden, welcher einen hohen Kontrast von Kennzeichentafeln in einem für den Infrarotbereich sensiblen Kamerabild ergibt. Auch kann die Videokamera mit verschiedenen Betriebsparametersätzen in den beiden Betriebsmodi betrieben werden, bevorzugt mit unterschiedlichen Belichtungsparametern wie Verschlußzeit, Verstärkung und/oder Gammakorrektur, um einerseits den Kontrast für die Kennzeichentafeldetektion im ersten Betriebsmodus zu erhöhen und andererseits die Kennzeichentafel (und das Fahrzeug) im zweiten Betriebsmodus so aufzunehmen, dass die anschließende Beweisführungs- oder OCR-Auswertung besonders einfach oder störungsunanfällig ist.

Eine weitere bevorzugte Ausführungsform der Erfindung zeichnet sich dadurch aus, dass dass die Belichtungsparameter der Videokamera im zweiten Betriebsmodus abhängig von der Reflektivität des in der ersten Bildfolge detektierten Kennzeichentafelteils eingestellt werden, sodass das System selbstadaptiv ist.

Weitere Merkmale und Vorteile der Erfindung ergeben sich aus der nachfolgenden Beschreibung eines bevorzugten Ausführungsbeispiels unter Bezugnahme auf die begleitenden Zeichnungen, in denen zeigt:
Fig. 1 eine erfindungsgemäße Vorrichtung zur Erkennung von Fahrzeug-Kennzeichentafeln an einem beispielhaften Straßenabschnitt in einer vereinfachten Perspektivansicht;
Fig. 2 ein Blockschaltbild der Vorrichtung von Fig. 1;
Fig. 3 das Abtastschema in den optischen Kamerabildern der Vorrichtung der Fig. 1 und 2 während des Verfahrens der Erfindung; und
Fig. 4 ein Sequenzdiagramm des Verfahrens der Erfindung anhand einer Abfolge darin auftretender Kamerabilder und Signale.

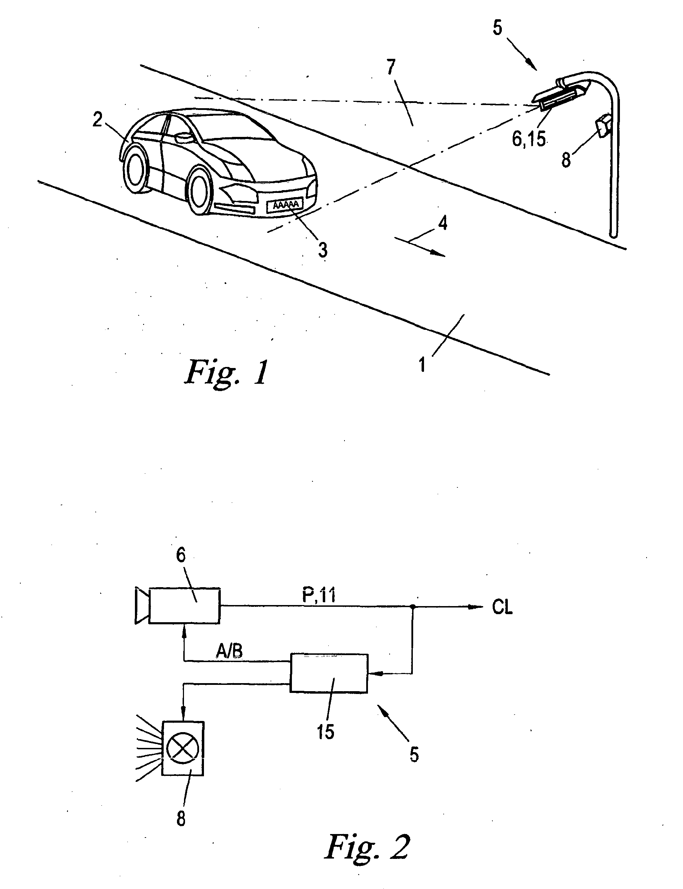

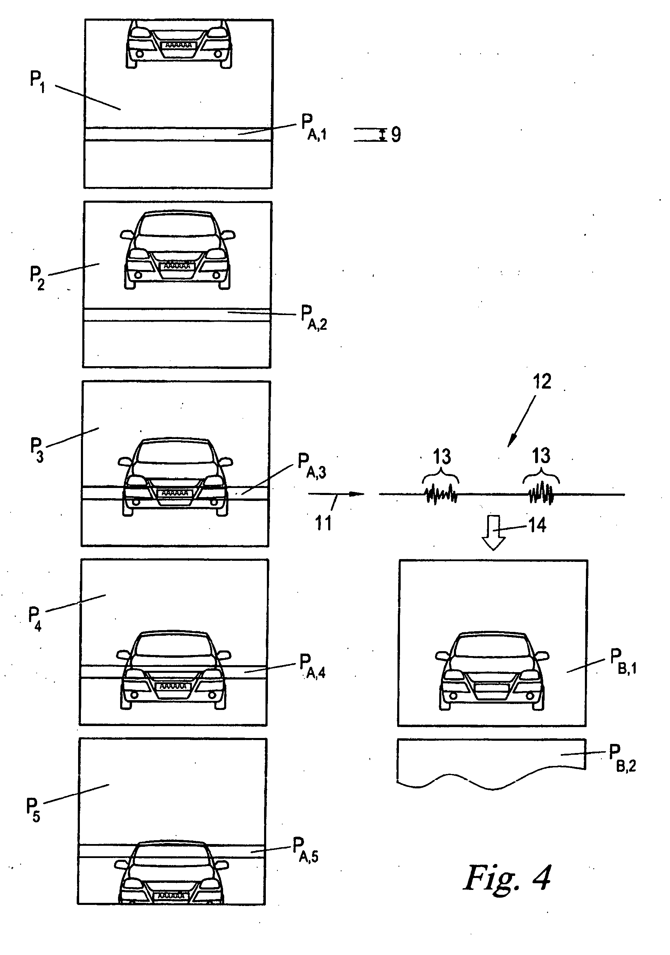

In Fig. 1 ist ein Straßenabschnitt 1 gezeigt, auf dem sich Fahrzeuge 2 mit Kennzeichentafeln 3, die in der Regel das behördliche Fahrzeugkennzeichen des Fahrzeugs tragen, in einer Fahrtrichtung 4 bewegen. Eine Vorrichtung 5 nimmt mit einer Videokamera 6 einen Film bzw. Videostream, d.h. eine Folge P von einzelnen Bildern P₁, P₂, ..., allgemein Pᵢ (siehe Fig. 4) ihres Blickfelds auf den Straßenabschnitt 1 auf und gibt die Bildfolge P auf einem Ausgang CL z.B. für Überwachungs- oder Aufzeichnungszwecke aus. Als optisches Kamerabild 7 der Videokamera 6 wird in der vorliegenden Beschreibung das von ihrer Optik auf ihrem internen Bildsensor abgebildete Blickfeld auf den Straßenabschnitt 1 bezeichnet, d.h. bevor es durch die Verschluss- bzw. Abtasteinrichtungen der Videokamera 6 in zeitlich aufeinanderfolgende Einzelbilder Pᵢ unterteilt bzw. abgetastet wird.

Zur Beleuchtung des Straßenabschnitts 1 mit den passierenden Fahrzeugen 2 umfasst die Vorrichtung 5 weiters eine Lichtquelle 8, z.B. einen Infrarotstrahler und/oder Strahler für sichtbares Licht, bevorzugt in Intensität, Ausleuchtbereich und/oder Wellenlänge steuerbar. Die Lichtquelle 8 kann sich auch aus mehreren einzeln oder gruppenweise angesteuerten Einzel-Lichtquellen zusammensetzen.

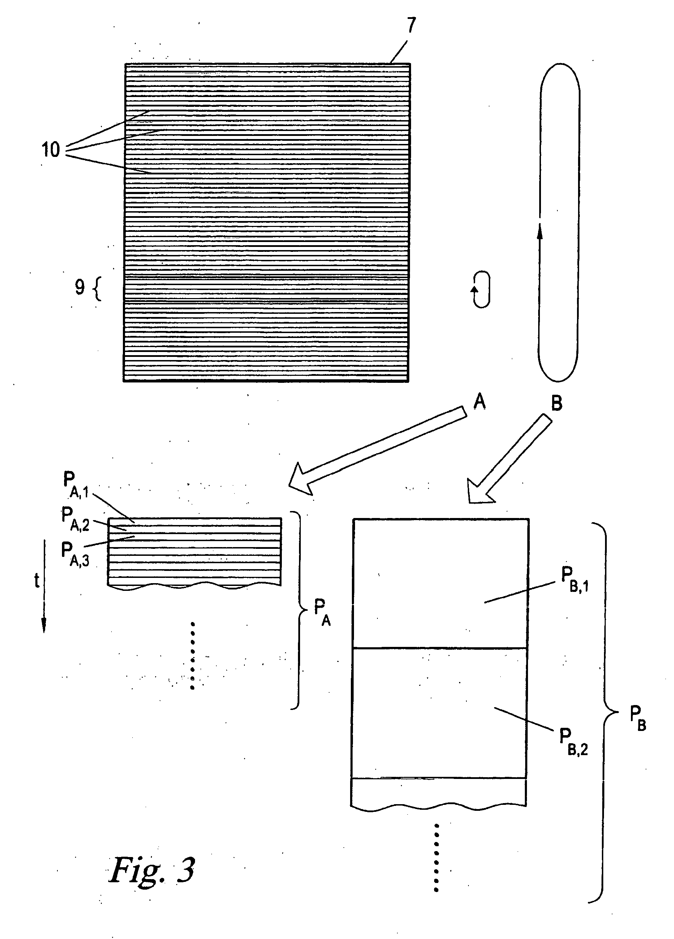

Unter Bezugnahme auf die Fig. 2 und 3 besitzt die Videokamera 6 zwei verschiedene Betriebsmodi A und B, in welchen sie Bildfolgen P mit einer unterschiedlichen Bildrate (frame rate), gemessen in Bildern pro Sekunde (frames per second, fps), erstellt.

In einem ersten Betriebsmodus A erzeugt die Kamera 6 eine erste Bildfolge P_{A}, welche sich aus einer Abfolge P_{A,1}, P_{A,2} usw. von schmalen streifenförmigen Ausschnitten 9 ihres optischen Kamerabildes 7 zusammensetzt, die mit einer hohen Bildrate aufeinanderfolgen, z.B. im Bereich von 100 bis 5000 fps.

In einem zweiten ("normalen") Betriebsmodus B erzeugt die Kamera 6 eine zweite Bildfolge P_{B} von Einzelbildern P_{B,1}, P_{B,2}, usw. ihres gesamten (oder zumindest eines Großteils desselbens) optischen Kamerabildes 7 mit einer "normalen" Bildrate von z.B. 20 bis 50 fps.

Bei Videokameras 6, welche ihr optisches Kamerabild 7 zeilenweise abtasten, können die beiden Betriebsmodi A und B einfach durch Definition der Anzahl von Abtastzeilen 10, welche in den jeweiligen Betriebsmodi A und B überstrichen werden, definiert werden: Verwendet die Videokamera 6 beispielsweise 1024 horizontale Abtastzeilen 10 im "normalen" Betriebsmodus B bei 25 fps, d.h. jedes Bild P_{B,i} wird in 1/25 s mit 1024 Stück Abtastzeilen 10 überstrichen und aufgelöst, dann kann - unter Beibehaltung derselben Abtastgeschwindigkeit - bei Verwendung von lediglich 16 Stück Abtastzeilen 10 im Betriebsmodus A eine wesentlich höhere (theoretisch bis zu 1024/16-flach höhere) Bildrate erzielt werden.

Mit heute verfügbaren und in Verkehrsüberwachungskameras üblicherweise verwendeten CCD-Bildwandlern können auf diese Weise z.B. Bildraten von 75 fps bei Verwendung von acht Abtastzeilen 10 im Betriebsmodus A erreicht werden; mit heute verfügbaren und in Verkehrsüberwachungskameras eingesetzten CMOS-Bildwandlern über 4000 fps bei 16 Stück Abtastzeilen 10 im Betriebsmodus A.

Die Auswahl der Abtastzeilen 10 und damit des Betriebsmodus A oder B kann bei herkömmlichen Industriestandard-Videokameras 6 mit einer Kameraschnittstelle nach dem CameraLink-Standard durch entsprechende Steuerbefehle auf der seriellen Schnittstelle der CameraLink-Schnittstelle eingestellt werden. Bevorzugt werden jedoch frei konfigurierbare Steuerleitungen des CameraLink-Standards, wie die CC1-, CC2-, CC3- oder CC4-Steuerleitungen, programmiert und zur Umschaltung zwischen den beiden Betriebsmodi A und B eingesetzt.

Aufbauend auf den erörterten Betriebsmodi A und B wird nun anhand der Fig. 3 und 4 das Verfahren zur Kennzeichentafelerkennung und damit die Funktionsweise der Vorrichtung der Fig. 1 und 2 näher erläutert. Zu Anfang und in ihrem "normalen" Detektionsmodus befindet sich die Kamera 6 im Betriebsmodus A, in welchem sie nur wenige Abtastzeilen 10 im schmalen streifenförmigen Ausschnitt 9 ihres gesamten optischen Kamerabildes 7 fortlaufend als erste Bildfolge P_{A} von schmalen Bildern P_{A,1}, P_{A,2} usw. auflöst. Der Ausschnitt 9 stellt eine "virtuelle Triggerlinie" für die Detektion einer Kennzeichentafel 3 dar, wenn diese den Fahrbahnabschnitt 1 und damit das optische Kamerabild 7 "durchfährt".

In dem in Fig. 4 gezeigten dritten Bild P_{A,3} der ersten Bildfolge P_{A} befindet sich die Kennzeichentafel 3 genau im Ausschnitt 9 und kann detektiert werden, indem das Abtastsignal 11 am Ausgang CL der Kamera 6 auf das Auftreten eines eine solche Kennzeichentafel 3 repräsentierenden Signals 12 überwacht wird. Ein solches Signal 12 kann insbesondere das Auftreten einer hohen Helligkeit bzw. Luminanz im Abtastsignal 11 sein, weil Kennzeichentafeln besonders stark reflektierend sind, insbesondere wenn sie noch zusätzlich durch eine Lichtquelle 8 beleuchtet werden. Wenn der Ausschnitt 9 beispielsweise vier Abtastzeilen 10 umfasst, besteht das gesamte Abtastsignal eines Bildes P_{A,i} im Betriebsmodus A bei einer zeilenweise abtastenden Kamera 6 aus vier aufeinanderfolgenden Abtastzeilen; eine Kennzeichentafel 3 in Ausschnitt 9 äußert sich dann - wenn sie den Ausschnitt 9 ganz einnimmt - in vier aufeinanderfolgenden Bursts 13 im Abtastsignal 11, u.zw. ein Burst 13 pro Abtastzeile 10. Bevorzugt erstreckt sich somit das zu detektierende Signal 12 über mehrere, bevorzugt alle Abtastzeilen 10 eines Ausschnitts 9 bzw. Bildes P_{A,i}.

Die Länge eines Bursts 13 entspricht dabei etwa der Breite der Kennzeichentafel 3 unter Berücksichtigung der geometrischen Verzerrungen des Blickfelds der Kamera 6. Wenn die Länge der Bursts 13 daher mitüberwacht und ausgewertet wird, können unterschiedliche Arten von Fahrzeugkennzeichen 3 anhand ihrer unterschiedlichen Breiten unterschieden werden. Überdies können auf diese Weise auch z.B. Fahrzeugscheinwerfer als mögliche Triggerquellen ausgeschlossen werden.

Sobald im Betriebsmodus A im Ausschnitt 9 ein Fahrzeugkennzeichen 3 anhand des Auftretens eines charakteristischen Signals 12 in Abschnitt 5 Signal 11 detektiert wird, wird in den Betriebsmodus B gewechselt (Pfeil 14). Die Auswertung des Abtastsignals 11 auf das Auftreten des charakteristischen Signals 12 bzw. der Bursts 13 kann beispielsweise in einer an die Videokamera 6 angeschlossenen Detektoreinrichtung 15 der Vorrichtung 5 erfolgen, welche ein entsprechendes Steuersignal A/B zur Umschaltung der Betriebsmodi an die Kamera 6 sendet (siehe Fig. 2). Die Detektoreinrichtung 15 kann beispielsweise direkt in das Gehäuse der Videokamera 6 integriert sein, wie in Fig. 1 gezeigt. Die Detektoreinrichtung 15 könnte überdies auch durch eine Hard- oder Softwarekomponente realisiert sein, welche in die Hardware der Videokamera 6 integriert ist oder von deren Prozessor ausgeführt wird.

Im anschließenden Betriebsmodus B wird nun zumindest ein Bild P_{B,i} der zweiten Bildfolge P_{B} erzeugt, welches nun das gesamte Blickfeld bzw. gesamte optische Kamerabild 7 (oder zumindest einen Großteil desselben) überstreicht, und zwar mit der "vollen" Anzahl von Abtastzeilen 10 in Betriebsmodus B. Das bzw. die im Betriebsmodus B erzeugten Bilder P_{B,i} können anschließend für Beweiszwecke oder zur OCR-Lesung des Fahrzeugkennzeichens 3 weiterverwendet werden. Durch die hohe Bildrate im vorangegangenen Detektions-Betriebsmodus A ist sichergestellt, dass das Fahrzeugkennzeichen 3 in oder nahe dem Ausschnitt 9 detektiert worden ist und sich damit im Bild P_{B,i} an einer weitgehend konstanten Position in oder nahe der "virtuellen Triggerlinie" des Ausschnitts 9 befindet. Dies erleichtert die anschließende Auswertung der so aufgenommenen Bilder P_{B,i}.

In den beiden Betriebsmodi A und B kann die Kamera 6 und/oder die Lichtquelle 8 mit verschiedenen Parametersätzen betrieben und angesteuert werden, und zwar je nach dem jeweiligen Anwendungszweck: Im Betriebsmodus A ist hoher Kontrast für die Kennzeichentafeldetektion gewünscht, im Betriebsmodus B allgemein gute Bildqualität und Schärfe für Beweisfotos und OCR-Auswertungen. Dementsprechend werden z.B. Verschlußzeit, digitale und/oder analoge Verstärkung (Gain), Gammakorrekturen usw. der Kamera 6, d.h. ihre optischen und/oder elektronischen Betriebsparameter, in den Betriebsmodi A und B unterschiedlich angesteuert und beim Umschalten entsprechend zur Anwendung gebracht. In gleicher Weise kann die Lichtquelle 8 entsprechend gesteuert werden, sei es in Lichtstärke, Ausleuchtwinkel, Lichtfarbe (Wellenlänge) usw. Auch kann die Detektoreinrichtung 15 dafür programmiert sein, aufgrund des im Betriebsmodus A auftretenden Abtastsignals 11 bzw. den Eigenschaften der darin detektierten Bursts 13 die Betriebsparameter der Kamera 6 und/oder der Lichtquelle 8 im Betriebsmodus B zu steuern, so dass die Betriebsparameter im Betriebsmodus B von den Mess- und Detektionswerten im Betriebsmodus A abhängig sind.

Nachdem ein oder mehrere Bilder P_{B,i} der zweiten Bildfolge P_{B} im Betriebsmodus B gemacht wurden, kehrt die Vorrichtung 5 bzw. das Verfahren wieder zum Betriebsmodus A zurück. Der Betriebsmodus B wird somit nur vorübergehend betreten, im einfachsten Fall auch nur für ein einziges - das erste - Bild P_{B,1} im Betriebsmodus B. Es versteht sich daher, dass die Bildrate im zweiten Betriebsmodus B, wenn dieser nur zur Anfertigung eines einzigen Bildes P_{B,1} betreten wird, dann als Reziprokwert der Dauer der Abtastung aller Abtastzeilen 10 dieses Bildes P_{B,i} im Betriebsmodus B definiert ist.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Vorrichtung zum Erkennen von Fahrzeug-Kennzeichentafeln (3), mit einer Videokamera (6), die auf einen Straßenabschnitt (1) mit passierenden Fahrzeugen (2) mit Kennzeichentafeln (3) richtbar ist, um ein optisches Kamerabild (7) aufzunehmen, das sie in eine elektronische Bildfolge (9) umwandelt,
wobei die Videokamera (6) einen ersten Betriebsmodus (A), in dem sie eine erste Bildfolge (P_{A}) eines Ausschnitts (9) ihres optischen Kamerabildes (7) mit einer hohen Bildrate erzeugt, und einen zweiten Betriebsmodus (B) hat, in dem sie eine zweite Bildfolge (P_{B}) ihres gesamten optischen Kamerabildes (7) mit einer niedrigen Bildrate erzeugt,
wobei die Videokamera (6) mittels eines Steuersignals (A/B) zumindest vorübergehend vom ersten in den zweiten Betriebsmodus versetzbar ist, und
wobei eine an die Videokamera (6) angeschlossene Detektoreinrichtung (15) vorgesehen ist, welche eingerichtet ist, bei Detektion zumindest eines Teiles einer Kennzeichentafel (3) in der ersten Bildfolge (P_{A}) das Steuersignal (A/B) an die Videokamera (6) zu senden, so dass diese in der zweiten Bildfolge (P_{B}) zumindest ein elektronisches Bild (P_{B,1}) erzeugt, welches die Kennzeichentafel (3) enthält,
**dadurch gekennzeichnet,**
**dass** die Videokamera (6) eingerichtet ist, die Bilder (P) der ersten Bildfolge (P_{A}) in einem schmalen streifenförmigen Ausschnitt (9) ihres Kamerabildes (7) jeweils in mehreren aufeinanderfolgenden Abtastzeilen (10) abzutasten, wobei der streifenförmige Ausschnitt (9) parallel zu den Abtastzeilen (10) liegt, um ein elektronisches Abtastsignal (11) zu erzeugen, welches die Detektoreinrichtung (15) fortlaufend auf das Auftreten eines eine Kennzeichentafel (3) anzeigenden Signals (12) überprüft,
wobei das zu detektierende Signal (12) eine Folge von Bursts (13) ist, deren Länge jeweils der Breite einer zu erkennenden Fahrzeug-Kennzeichentafel (3) entspricht, sodass das genannte Bild (P_{B,1}) die Kennzeichentafel (3) in oder nahe dem genannten Ausschnitt (9) enthält.

2. Vorrichtung nach Anspruch 1, **dadurch gekennzeichnet, dass** sie zumindest eine Lichtquelle (8) umfasst, welche auf den Fahrbahnabschnitt (1) richtbar ist und diesen im ersten Betriebsmodus (A) anders beleuchtet als im zweiten Betriebsmodus (B) der Videokamera (6), bevorzugt stärker und/oder in einem anderen Wellenlängenbereich.

3. Vorrichtung nach Anspruch 1 oder 2, **dadurch gekennzeichnet, dass** die Videokamera (6) im ersten Betriebsmodus (A) andere Belichtungsparameter hat als im zweiten Betriebsmodus (B), bevorzugt eine andere Verschlußzeit, Verstärkung und/oder Gammakorrektur.

4. Vorrichtung nach Anspruch 3, **dadurch gekennzeichnet, dass** die Belichtungsparameter der Videokamera (6) im zweiten Betriebsmodus (B) abhängig von der Reflektivität des in der ersten Bildfolge (P_{A}) detektierten Kennzeichentafelteils (3) eingestellt werden.

5. Vorrichtung nach einem der Ansprüche 1 bis 4, **dadurch gekennzeichnet, dass** die Videokamera (6) eine CMOS- oder CCD-Kamera ist.

6. Verfahren zum Erkennen einer Fahrzeug-Kennzeichentafel (3) im optischen Kamerabild (7) einer Verkehrsüberwachungskamera (6), die auf einen Straßenabschnitt (1) gerichtet ist, mit den Schritten:
a) wiederholtes zeilenweises elektronisches Abtasten eines schmalen, jeweils mehrere aufeinanderfolgende Abtastzeilen (10) umfassenden streifenförmigen Ausschnitts (9) des optischen Kamerabildes (7) zur Erzeugung eines elektronischen Abtastsignals (11), welches fortlaufend auf das Auftreten eines eine Kennzeichentafel (3) anzeigenden Signals (12) überprüft wird, wobei das zu detektierende Signal (12) eine Folge von Bursts (13) ist, deren Länge jeweils der Breite einer zu erkennenden Fahrzeug-Kennzeichentafel (3) entspricht, und, wenn ein solches Signal (12) detektiert wird,
b) zumindest einmaliges zeilenweises elektronisches Abtasten des gesamten optischen Kamerabildes (7), um zumindest ein elektronisches Abtastbild (P_{B,1}) des gesamten optischen Kamerabildes (7) zu erzeugen, welches die Kennzeichentafel (3) in oder nahe dem genannten Ausschnitt (9) enthält.

7. Verfahren nach Anspruch 6, **dadurch gekennzeichnet, dass** in Schritt a) der Straßenabschnitt (1) anders beleuchtet wird als in Schritt b), bevorzugt stärker und/oder in einem anderen Wellenlängenbereich.

8. Verfahren nach Anspruch 6 oder 7, **dadurch gekennzeichnet, dass** in Schritt a) die Kamera (6) mit anderen Belichtungsparametern betrieben wird als in Schritt b), bevorzugt mit einer anderen Verschlußzeit, Verstärkung und/oder Gammakorrektur.

9. Verfahren nach Anspruch 8, **dadurch gekennzeichnet, dass** die Belichtungsparameter der Kamera (6) in Schritt b) abhängig von dem in Schritt a) detektierten Signal (11-13) eingestellt werden.

## Claims

1. A device for detecting vehicle license plates (3), comprising a video camera (6) that can be aimed on a street section (1) with passing vehicles (2) with license plates (3), in order to record an optical camera image (7), which it converts to an electronic image sequence (9),
wherein the video camera (6) has a first operating mode (A) in which it generates a first image sequence (P_{A}) of a section (9) of its optical camera image (7) at a high frame rate, and a second operating mode (B) in which it generates a second image sequence (P_{B}) of its overall optical camera image (7) at a low frame rate,
wherein the video camera (6) is displaceable by means of a control signal (A/B) at least temporarily from the first into the second operating mode, and
wherein a detector unit (15) connected to the video camera (6) is provided, which is designed to, upon detection of at least a portion of a license plate (3) in the first image sequence (P_{A}), send the control signal (A/B) to the video camera (6), so that the latter generates in the second image sequence (P_{B}) at least one electronic image (P_{B,1}) which contains the license plate (3),
**characterized in that**
the video camera (6) is designed to scan the images (P) of the first image sequence (P_{A}) in a small strip-shaped section (9) of its camera image (7), in each case in several successive scan lines (10), where the strip-shaped section (9) lies parallel to the scan lines (10), for creating an electronic scanning signal (11) which the detector unit (15) checks continuously for the occurrence of a signal (12) indicating a license plate (3),
wherein the signal (12) to be detected is a sequence of bursts (13), the length of which corresponds to the width of a vehicle license plate (3) to be detected so that said image (P_{B,1}) contains the license plate (3) in or near the mentioned section (9).

2. The device according to Claim 1, **characterized in that** it comprises at least one light source (8) which can be aimed on the road section (1), and which illuminates said section differently in the first operating mode (A) than in the second operating (B) mode of the video camera (6), preferably more strongly and/or in a different wavelength range.

3. The device according to Claim 1 or 2, **characterized in that** the video camera (6) has different exposure parameters in the first operating mode (A) than in the second operating mode (B), preferably a different shutter speed, gain and/or gamma correction.

4. The device according to Claim 3, **characterized in that**, in the second operating mode (B), the exposure parameters of the video camera (6) are set depending on the reflectivity of the license plate portion (3) detected in the first image sequence (P_{A}).

5. The device according to one of Claims 1 to 4, **characterized in that** the video camera (6) is a CMOS or CCD camera.

6. A method for detecting a vehicle license plate (3) in the optical camera image (7) of a traffic monitoring camera (6) that is aimed on a street section (1), with the steps:
a) repeated, line-by-line, electronic scanning of a small, strip-shaped section (9), in each case comprising several successive scan lines (10), of the optical camera image (7) for the generation of an electronic scanning signal (11), which is checked continuously for the occurrence of a signal (12) indicating a license plate (3), wherein the signal (12) to be detected is a sequence of bursts (13), the length of which corresponds to the width of a vehicle license plate (3) to be detected, and if such a signal (12) is detected,
b) at least a one-time, line-by-line, electronic scanning of the entire optical camera image (7), in order to generate an electronic scanning image (P_{B,1}) of the entire optical camera image (7), which contains the license plate (3) in or near the mentioned section (9).

7. The method according to Claim 6, **characterized in that**, in step a), the road section (1) is illuminated differently than in step b), preferably more strongly and/or in a different wavelength range.

8. The method according to Claim 6 or 7, **characterized in that**, in step a), the camera (6) is operated with different exposure parameters than in step b), preferably with a different shutter speed, gain and/or gamma correction.

9. The method according to Claim 8, **characterized in that** the exposure parameters of the camera (6) in step b) are set depending on the signal (11-13) detected in step a).

## Revendications

1. Dispositif pour la reconnaissance de plaques d'immatriculation de véhicules (3), avec une caméra vidéo (6) susceptible d'être orientée vers un tronçon de route (1) avec des véhicules en circulation (2) avec des plaques d'immatriculation (3), afin de capter une image vidéo optique (7) pour la transformer en une série d'images électroniques (9),
dans lequel la caméra vidéo (6) présente un premier mode de fonctionnement (A), dans lequel elle produit une première série d'images (P_{A}) d'une partie (9) de son image vidéo optique (7) avec une cadence d'image élevée, et un deuxième mode de fonctionnement (B), dans lequel elle produit une deuxième série d'images (P_{B}) de l'ensemble de son image vidéo optique (7) avec une cadence d'image moins élevée,
dans lequel la caméra vidéo (6) peut passer au moins temporairement du premier au deuxième mode de fonctionnement au moyen d'un signal de commande (A/B), et
dans lequel il est prévu un dispositif de détection (15) raccordé à la caméra vidéo (6), lequel est conçu pour envoyer le signal de commande (A/B) à la caméra vidéo (6) lors de la détection d'au moins une partie d'une plaque d'immatriculation (3) dans la première série d'images (PA) pendant la détection, de manière à ce que celle-ci produise au moins une image électronique (P_{B,1}) contenant la plaque d'immatriculation (3) dans la deuxième série d'images (P_{B}),
**caractérisé en ce que**
la caméra vidéo (6) est conçue pour explorer les images (P) de la première série d'images (P_{A}) dans une partie étroite en forme de bande (9) de son image vidéo (7), respectivement dans plusieurs lignes de balayage consécutives (10), la partie en forme de bande (9) étant parallèlement aux lignes de balayages (10), afin de produire un signal de balayage électronique (11) contrôlé en continu par le dispositif de détection (15) en vue d'un signal (12) indiquant l'apparition d'une plaque d'immatriculation (3),
dans lequel le signal (12) à détecter est une série de salves (13), dont la longueur correspond respectivement à la largeur d'une plaque d'immatriculation de véhicule (3) à reconnaître, de sorte que ladite image (P_{B,1}) contient la plaque d'immatriculation (3) dans ou à proximité de ladite partie (9).

2. Dispositif selon la revendication 1, **caractérisé en ce qu'**il comprend au moins une source de lumière (8) susceptible d'être orientée vers le tronçon de route (1) et éclairant celui-ci différemment dans le premier mode de fonctionnement (A) que dans le deuxième mode de fonctionnement (B) de la caméra vidéo (6), de préférence plus intensément et/ou dans une autre plage de longueur d'ondes.

3. Dispositif selon la revendication 1 ou 2, **caractérisé en ce que** la caméra vidéo (6) présente d'autres paramètres d'exposition dans le premier mode de fonctionnement (A) que dans le deuxième mode de fonctionnement (B), de préférence une autre vitesse d'obturation, un autre gain et/ou une autre correction gamma.

4. Dispositif selon la revendication 3, **caractérisé en ce que** dans le deuxième mode de fonctionnement (B), les paramètres d'exposition de la caméra vidéo (6) sont réglés en fonction de la réflectivité de la partie de plaque d'immatriculation (3) détectée dans la première série d'images (P_{A}) .

5. Dispositif selon l'une des revendications 1 à 4, **caractérisé en ce que** la caméra vidéo (6) est une caméra CMOS ou CCD.

6. Procédé pour la reconnaissance d'une plaque d'immatriculation de véhicule (3) dans l'image vidéo optique (7) d'une caméra de surveillance de la circulation (6) orientée vers un tronçon de route (1), avec les étapes:
a) balayage électronique répété par lignes d'une partie étroite en forme de bande (9) de l'image vidéo optique (7) comprenant respectivement plusieurs lignes de balayage consécutives (10), pour la production d'un signal de balayage électronique (11) contrôlé en continu en vue de l'apparition d'un signal (12) indiquant une plaque d'immatriculation (3), dans lequel le signal (12) à détecter est une série de salves (13) dont la longueur correspond respectivement à la largeur de la plaque d'immatriculation de véhicule (3) à détecter, et, lorsqu'un tel signal (12) est détecté,
b) exécution au moins une fois d'un balayage électronique par lignes de l'ensemble de l'image vidéo optique (7), pour produire au moins une image de balayage électronique (P_{B,1}) de l'ensemble de l'image vidéo optique (7), laquelle contient la plaque d'immatriculation (3) dans ou à proximité de ladite partie (9).

7. Procédé selon la revendication 6, **caractérisé en ce que** dans l'étape a), le tronçon de route (1) est éclairé différemment que dans l'étape b), de préférence plus intensément et/ou dans une autre plage de longueur d'ondes.

8. Procédé selon la revendication 6 ou 7, **caractérisé en ce que** dans l'étape a), la caméra (6) fonctionne avec d'autres paramètres d'exposition que dans l'étape b), de préférence avec une autre vitesse d'obturation, un autre gain et/ou une autre correction gamma.

9. Procédé selon la revendication 8, **caractérisé en ce que** dans l'étape b), les paramètres d'exposition de la caméra (6) sont réglés en fonction du signal (11-13) détecté dans l'étape a).
